# EUROPÄISCHE PATENTANMELDUNG

(11) **EP 4 467 298 A1**
(43) Veröffentlichungstag der Anmeldung: **27.11.2024**
(21) Anmeldenummer: 23175685.9
(22) Anmeldetag: 26.05.2023
(51) Int. Cl.: B25J 15/06

(54) **GREIFVORRICHTUNG UND ROBOTERARM**

(71) Anmelder: Siemens Aktiengesellschaft, 80333 München (DE)
(72) Erfinder: Blumberg, Adrian, 85646 Anzing (DE); Pantano, Matteo, 81373 München (DE); Denneler, Stefan, 81371 München (DE)
(74) Vertreter: Siemens Patent Attorneys

(57) **Zusammenfassung**

Die Erfindung betrifft eine Greifvorrichtung zum Aufnehmen von Gegenständen (6) in einem Produktionsprozess. Die Greifvorrichtung umfasst dabei
- ein Gehäuse (4), das an einer dem zu greifenden Gegenstand (6) zugewandten Seite eine Greiffläche (8) aufweist, die Teil einer Greifplatte (10) ist und
- eine Dauermagnetplatte (12), die einer der Greiffläche (8) gegenüberliegenden Fläche (14) der Greifplatte (10) zugewandt ist und die
- entlang einer Lotgerade (16) zur Greiffläche (8) innerhalb des Gehäuses (4) translatorisch (26) bewegbar gelagert ist, wobei
- die Dauermagnetplatte (12) kontinuierlich von streifenförmigen magnetischen Nord-Süd-Polarisierungen (18) durchzogen ist.

## Beschreibung

Die Erfindung betrifft eine Greifvorrichtung zum Aufnehmen von Gegenständen nach Patentanspruch 1 sowie einen Roboterarm mit einer Greifvorrichtung nach Patentanspruch 14.

In der industriellen Produktion werden zum Greifen und Heben von Gegenständen, also Halbzeugen oder Produkten im Produktionsprozess Greifvorrichtungen verwendet. Derartige Greifvorrichtungen basieren entweder auf Saugvorrichtungen, wobei mittels Unterdruck die zu greifenden Gegenstände angesaugt werden oder, falls es sich bei den Gegenständen, die zu greifen sind, um magnetische Gegenstände handelt, kommen auch elektromagnetische Greifvorrichtungen zum Einsatz.

Insbesondere bei sehr filigranen bzw. dünnschichtigen und mechanisch wenig stabilen Gegenständen sind sowohl die Vakuumgreifvorrichtungen als auch elektromagnetische Greifvorrichtungen wenig geeignet. Die Vakuumgreifvorrichtungen saugen die Gegenstände punktuell mit einer hohen Kraft an, sodass es häufig zur Zerstörung der empfindlichen Gegenstände kommt. Elektromagnetische Greifvorrichtungen, die an sich gut steuerbar sind, da ein elektrischer Strom bei dem Elektromagneten ein- oder ausgeschaltet wird, sind aber aufgrund dieses An-Aus-Prinzipes bezüglich der anzuwendenden Kraft schlecht dosierbar. Außerdem weisen sie auf eine bestimmte Fläche gesehen häufig ein unzureichend homogenes Magnetfeld auf.

Hinzu kommt, dass es sich bei den beschriebenen Technologien für Greifvorrichtungen um mechanisch stabile aber durchaus auch schwere und großvolumige Greifvorrichtungen handelt, die bei sogenannten kollaborativen Robotern, also Robotern, die nicht abgeschirmt in der Nähe von Menschen operieren dürfen, zu schwer sind.

Daher besteht die Aufgabe der Erfindung darin, eine Greifvorrichtung sowie einen Roboterarm mit einer Greifvorrichtung bereitzustellen, die gegenüber dem Stand der Technik eine homogener verteilte Aufnahmekraft aufweist, wobei die Aufnahmekraft besser und feiner steuerbar ist und das Potenzial zu einer Leichtbauanwendung aufweist. Die Lösung der Aufgabe besteht in einer Greifvorrichtung mit den Merkmalen des Patentanspruchs 1 sowie in einem Roboterarm nach Patentanspruch 14.

Die Greifvorrichtung zum Aufnehmen von Gegenständen in einem Produktionsprozess nach Patentanspruch 1 umfasst dabei folgende Merkmale. Dies ist zum einen ein Gehäuse, das an einer den zu greifenden Gegenstand zugewandten Seite eine Greiffläche aufweist, die Teil einer Greifplatte ist. Die Greiffläche ist demnach die Fläche, an der während des Greifprozesses der zu greifende Gegenstand anhaftet. Ferner weist die Greifvorrichtung eine Dauermagnetplatte auf, die eine der Greiffläche gegenüberliegenden Fläche der Greifplatte zugewandt ist. Diese Dauermagnetplatte ist innerhalb des Gehäuses, das sowohl die Greifplatte als auch die Dauermagnetplatte umfasst, translatorisch bewegbar gelagert. Ferner ist die Dauermagnetplatte kontinuierlich von streifenförmigen, magnetischen Nord-Süd-Polarisierungen durchzogen.

Dabei seien die bezüglich des Patentanspruchs 1 verwendeten Begriffe wie folgt definiert. Die zu greifenden Gegenständen sind Gegenstände, die im Produktionsprozess oder in einem sonstigen automatisierten oder teilautomatisierten Prozess beispielsweise im Baubereich von der Greifvorrichtung aufgenommen werden können und somit nicht Bestandteil der Greifvorrichtung sind. Die Greifplatte ist eine im Wesentlichen ebene Platte, die dabei zwei Seiten aufweist, zum einen die Greiffläche und zum anderen die der Greiffläche gegenüberliegende Fläche. Dabei kann die Greifplatte in derart ausgestaltet sein, dass sie Teil des Gehäuses ist und die Greiffläche den Gehäuseteil darstellt, an dem dann der zu greifende Gegenstand anhaftet. Demnach zeigt die gegenüberliegende Fläche ins Gehäuseinnere. Das Gehäuse muss dabei nicht eine hermetische Umschließung der weiteren beschriebenen Bestandteile der Greifvorrichtung sein, es kann auch teilweise offen oder lediglich durch verbindende und zusammenhaltenden Streben ausgestaltet sein.

Unter den streifenförmigen magnetischen Nord-Süd-Polarisierungen werden in der Regel parallele Streifen verstanden, bei denen die magnetische Polarisierung alternierend abwechselt. Derartige Streifen von Nord-Süd-Polarisierungen können jedoch auch in Form von konzentrischen Kreisen bzw. konzentrischen Segmentabschnitten eines Kreises sein. Dies hängt davon ab, wie die Dauermagnetplatte technisch ausgestaltet ist und magnetisiert ist. Unter streifenförmig ist jedoch nicht nur ein streng geometrischer paralleler Verlauf zu verstehen. Vorteilhaft ist dabei insbesondere eine möglichst enge alternierende magnetische Polarisierung, die zu einem möglichst homogenen Dauermagnetfeld führt.

Die beschriebene Erfindung überwindet die Nachteile des Standes der Technik in verschiedenen Aspekten. Zum einen ist mittels eines Dauermagneten ein kontinuierliches und gleichmäßiges Magnetfeld in einer Ebene darstellbar. Dieses Magnetfeld ist mittels der translatorischen Bewegung entlang der Lotachse zur Greiffläche bezüglich des zu greifenden Gegenstandes quasi ein- und ausschaltbar. Durch die translatorische Bewegung der Magnetplatte zum zu greifenden Gegenstand hin oder weg kann die Stärke des Magnetfeldes, das auf den zu greifenden Gegenstand wirkt, zwischen null und maximal eingestellt werden. Das entspricht dem Ein- und Ausschalten eines sonst üblichen Elektromagneten. Der Vorteil gegenüber der Verwendung eines Elektromagneten besteht jedoch darin, dass durch die Entfernung der Dauermagnetplatte von dem zu greifenden Gegenstand, also zu der Position entlang der translatorischen Bewegung auch noch die Stärke des Magnetfeldes variiert werden kann, sodass dieses homogene Magnetfeld auch als schwach oder stark eingestellt werden kann. Auf diese Weise kann auf die Anforderung verschiedener zu greifender Gegenstände, die insbesondere mechanisch unterschiedlich empfindlich sind, eingegangen werden.

Als zusätzlicher Vorteil gegenüber der Greifvorrichtung nach dem Stand der Technik ist die beschriebene Greifvorrichtung auch leichtbautechnisch zu konstruieren.

Hierfür ist beispielsweise das Gehäusematerial mit einem Material aus einer sehr geringen Dichte, das kleiner als 3 g/cm³ ist, auszugestalten. Besonders bevorzugt ist dabei das Gehäusematerial ein Kunststoff, der wiederum besonders bevorzugt durch ein additives Herstellungsverfahren genau nach den Anforderungen des zu greifenden Gegenstandes und dessen Geometrie darstellbar ist.

Ferner ist es insbesondere um die Leichtbauanforderungen an eine mögliche Greifvorrichtung zu erfüllen, zweckmäßig, wenn die translatorische Bewegung der Dauermagnetplatte mittels einer Pneumatikvorrichtung erfolgt. Hierzu können Pneumatikschläuche direkt an die Dauermagnetplatte oder eine Trägerplatte, an der die Dauermagnetplatte befestigt ist, herangeführt werden. Somit ist die eigentliche Pneumatikvorrichtung abseits der Greifvorrichtung installiert und muss nicht während des Greifprozesses mitbewegt werden. Dies erspart die Bewegung von schweren technischen Bauteilen.

In einer anderen vorteilhaften Ausgestaltungsform der Erfindung ist ein Elektromotor vorgesehen, der die translatorische Bewegung der Dauermagnetplatte gewährleistet. Dieser Elektromotor kann beispielsweise ein Servomotor oder ein Linearmotor sein, wobei auch mehrere Elektromotoren gleichzeitig zum Einsatz kommen können. Dabei kann der Linearmotor direkt die translatorische Bewegung ausführen, ein Servomotor, der in der Regel ein niedrigeres Gewicht aufweist, benötigt zudem noch eine Umlenkvorrichtung, die die rotatorische Bewegung des Servomotors in eine translatorische Bewegung umwandelt.

Die Dauermagnetplatte ist dabei in ihrer magnetischen Polarisierung bevorzugt so ausgestaltet, dass die Breite von jeweils zwei Streifen einer Nord-Süd-Polarisierung weniger als 25 % eines Magnetplattendurchmessers beträgt. Dieser prozentuale Anteil des Magnetplattendurchmessers ist bevorzugt geringer als 15 % und besonders bevorzugt geringer als 10 %. Es ist dabei anzustreben, dass die jeweils zwei Streifen einer Nord-Süd-Polarisierung möglichst schmal sind, sodass das Magnetfeld der Dauermagnetplatte möglichst konstant ist. Dabei entspricht der Magnetplattendurchmesser im Wesentlichen dem Durchmesser der Greiffläche. Weist die Magnetplatte oder die Greiffläche eine nicht kreisförmige Geometrie auf, dann wird unter dem Begriff Durchmesser der längste Abstand zwischen zwei Außenrändern der Greifplatte bzw. der Dauermagnetplatte verstanden. Diese wäre in einem Rechteck oder Quadrat dann die Diagonale.

In einer weiteren Ausgestaltungsform der Erfindung ist es zweckmäßig, dass mittels eines Abstandes der Dauermagnetplatte von der Greifplatte entlang der Lotgerade die Stärke eines Magnetfelds, das auf den zu greifenden Gegenstand wirkt, einstellbar ist. Hierdurch kann auf das erforderliche Magnetfeld, das auf den zu greifenden Gegenstand wirkt, eingegangen werden.

Ferner ist es zweckmäßig, dass die Greifvorrichtung eine Aufnahmevorrichtung für einen Roboterarm umfasst. Somit kann die Greifvorrichtung an einem Roboterarm befestigt werden, um den Greifvorgang auszuführen. Unter einem Roboterarm ist dabei eine jegliche Vorrichtung des industriellen Maschinenbaus zu verstehen, bei dem die Greifvorrichtung entsprechend der im Produktionsprozess erforderlichen Bewegungsabläufe bewegt werden kann.

Ferner ist Bestandteil der Erfindung ein Roboterarm mit einer Greifvorrichtung nach einem der Ansprüche 2 bis 13. Dieser Roboterarm mit der Greifvorrichtung weist dieselben Vorteile auf, die bereits bezüglich der Greifvorrichtung allein beschrieben sind.

Weitere Ausgestaltungsformen der Erfindung und weitere Merkmale werden anhand der folgenden Figuren näher erläutert. Merkmale mit derselben Bezeichnung aber in unterschiedlichen Ausgestaltungsformen sind dabei mit denselben Bezugszeichen versehen. Es handelt sich dabei um rein schematische Darstellungen, die keine Einschränkungen des Schutzbereiches darstellen. Dabei zeigen:
- Figur 1: einen Roboterarm mit einer Greifvorrichtung,
- Figur 2: eine Explosionsdarstellung einer Greifvorrichtung mit und ohne Gehäuse,
- Figur 3: einen Ausschnitt aus einer Greifvorrichtung mit Greifplatte und Magnetplatte und Antrieb in zwei verschiedenen Ansichten,
- Figur 4: einen Elektromotor zum Bewegen einer Magnetplatte mit Umlenkvorrichtung als Teil der Greifvorrichtung und
- Figur 5: Beispiele für magnetische Polarisierung der Dauermagnetplatte.

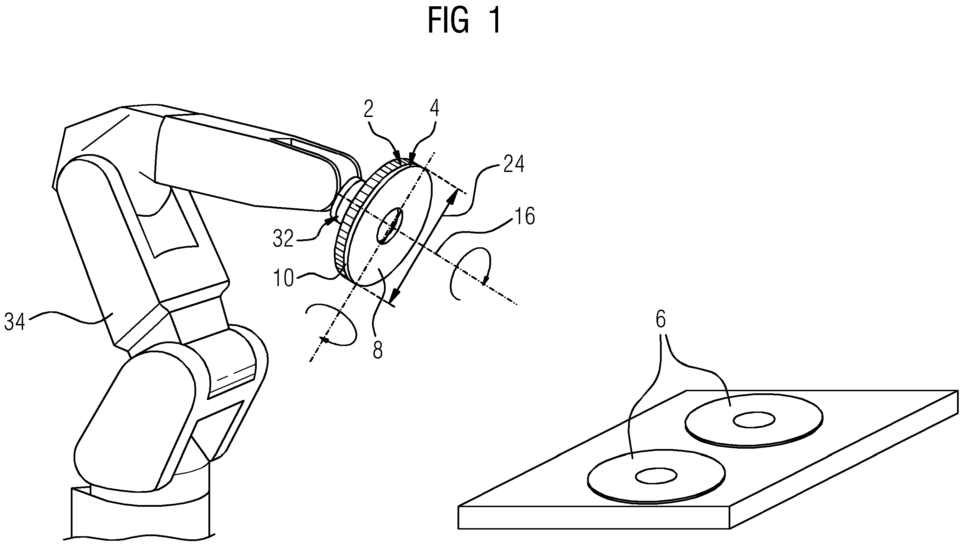

In Figur 1 ist ein Roboterarm 34 dargestellt, an dem eine Greifvorrichtung 2 montiert ist. Die Greifvorrichtung 2 dient dazu, zu greifende Gegenstände 6 in einem Produktionsprozess zwischen zwei Produktionsschritten zu bewegen. Bei den zu greifenden Gegenständen 6 handelt es sich insbesondere um magnetische Bleche, die unter anderem vor einem Sinterprozess in einer Grünkörperform vorliegen. Die zu greifenden Gegenstände 6 im vorliegenden Beispiel weisen eine rotationssymmetrische Geometrie auf, mit einem Durchmesser, der üblicherweise zwischen 100 mm und 300 mm liegt. Die Dicke der zu greifenden Grünkörperscheiben beträgt jedoch lediglich zwischen 100 µm und 400 µm. Das bedeutet, dass die zu greifenden Gegenstände 6 sehr fragil sind, jedoch ferromagnetische Eigenschaften aufweisen.

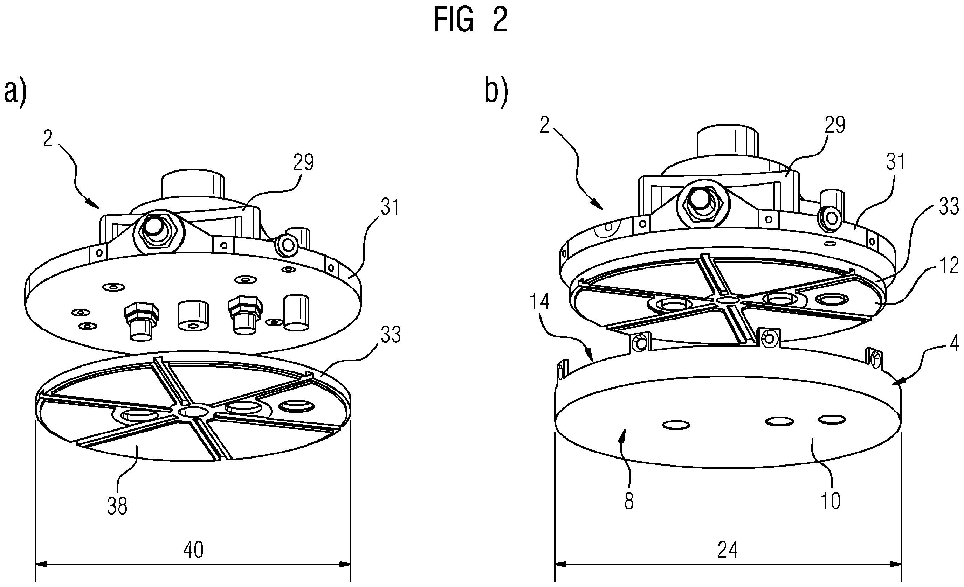

Die Greifvorrichtung 2 ist in einer Explosionsdarstellung in Figur 2 schematisch dargestellt. Dabei ist zunächst in Figur 2b ein Gehäuse 4 vorgesehen, das eine Greifplatte 10 umfasst. Die Greifplatte 10 wiederum weist dabei eine Greiffläche 8 auf, die dem zu greifenden Gegenstand 6 zugewandt ist. Ferner weist die Greifplatte 10 eine hier nicht explizit sichtbare Fläche 14 auf, die der Greiffläche 8 gegenüberliegt. Dieser Fläche 14 wiederum ist eine Dauermagnetplatte 12 zugewandt, die in der Ausgestaltung gemäß Figur 2a und 2b mit einer Trägerplatte 30 versehen ist. Ferner ist eine Motor-Montageplatte 31 vorgesehen, auf der ein Elektromotor 28 in Form eines Servomotors 29 montiert ist.

Dabei ist anzumerken, dass die Bauteile Gehäuse 4, Trägerplatte 33 und Motor-Montageplatte 31 grundsätzlich aus Leichtmetall wie Aluminium oder Magnesium (beispielsweise im Druckgussverfahren hergestellt) oder durch einen tragfesten Kunststoff ausgestaltet sein können. Alle Bauteile können dabei durch ein additives Herstellungsverfahren beispielsweise im 3D-Druckverfahren hergestellt werden. Das ist insbesondere bei Kunststoffbauteilen dann zweckmäßig, wenn zur Gewährleistung der mechanischen Stabilität komplexe Stützstrukturen für die Bauteile notwendig sind.

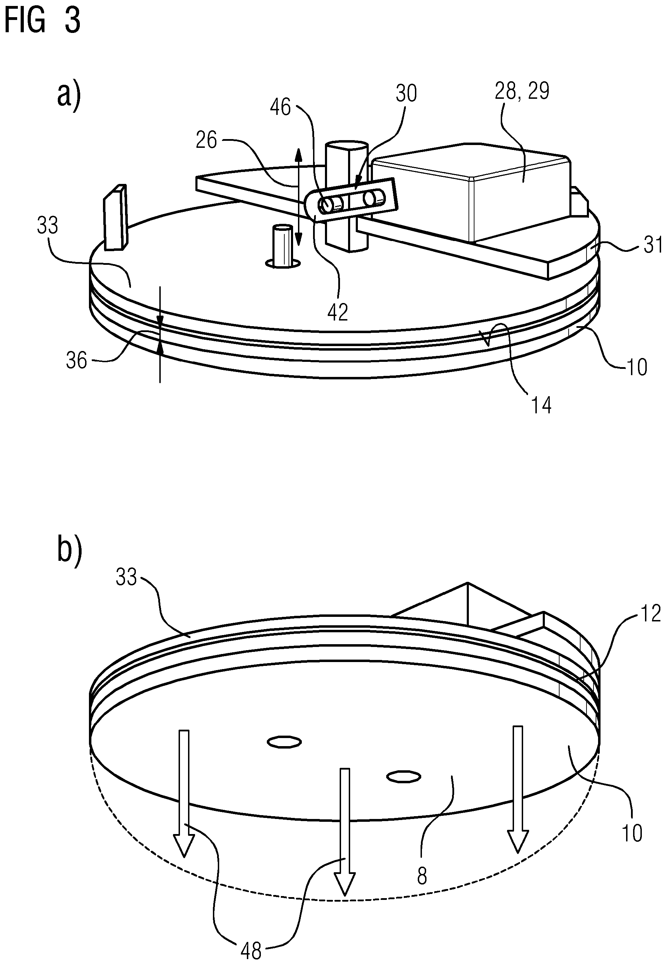

In Figur 3 ist in zwei verschiedenen Blickwinkeln (Fig. 3a und 3b) eine schematische Darstellung für die Umsetzung der translatorischen Bewegbarkeit der Dauermagnetplatte 12 bezüglich der Greifplatte 10 beschrieben. Hierzu ist ein Elektromotor 28 in Form eines Servomotors 29 auf einer Motorenträgerplatte montiert (insbesondere in Figur 3a zu erkennen). Ferner ist eine Umlenkvorrichtung 30 vorgesehen, die dazu geeignet ist, eine rotatorische Bewegung des Servomotors 29 in eine translatorische Bewegung 26 der Trägerplatte 30 für die Dauermagnetplatte 12 zu gewährleisten. Dies geschieht beispielsweise über einen Exzenterhebel 42, der in einen Transportzapfen 46 eingreift und somit durch die Exzenterbewegung des Exzenterhebels 42 die translatorische Bewegung 26 vollzieht. Dabei wird je nach Drehstellung des Servomotors 29 ein bestimmter Hub der Trägerplatte 30 bezüglich der Motor-Montageplatte 31 bewerkstelligt. Dieser Hub wiederum bewirkt einen Abstand 36 zwischen der Greifplatte 10, genauer gesagt zwischen der Fläche 14 der Greifplatte 10 und der Dauermagnetplatte 12. Auf diese Weise ist mittels der translatorischen Bewegung 26 dieser Abstand 36 genau abstimmbar, sodass auch eine Magnetfeld 48 mit eine dezidierten Feldstärke und Feldlinienverlauf an der Greiffläche 8 eingestellt werden kann.

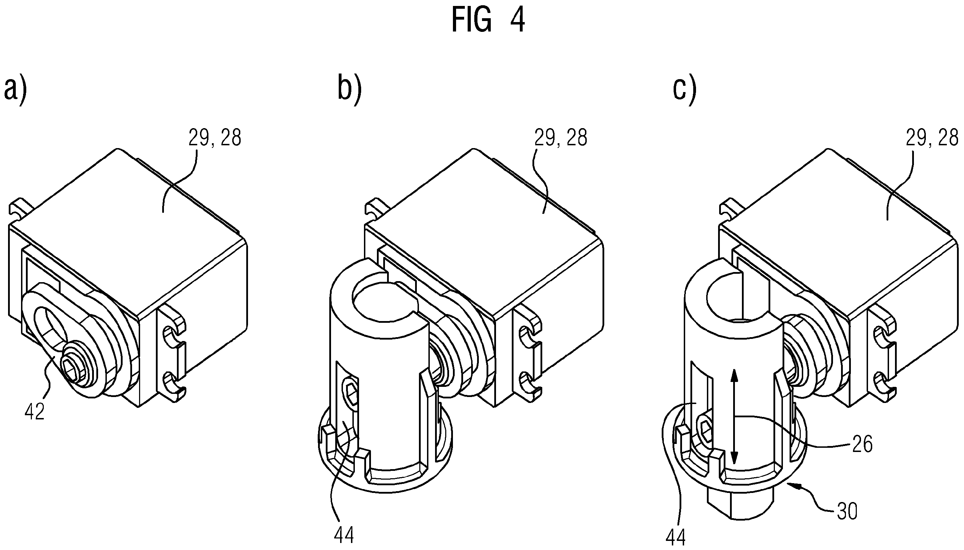

In Figur 4 ist eine etwas detailliertere Ausgestaltung des Servomotors 29 mit dem Exzenterhebel 42 sowie dem Transportbolzen 46, der in einer translatorischen Führungsschiene 44 gelagert ist, gegeben, wodurch durch die Exzenterbewegung die translatorische Bewegung 26 beschrieben wird. Als Alternativen hierzu wäre es auch möglich, die translatorische Bewegung 26 durch einen hier nicht dargestellten Linearmotor zu gewährleisten, wobei man sich hiermit die Umlenkvorrichtung 30 einsparen könnte. Der Servomotor 29 einschließlich der Umlenkvorrichtung 30 ist jedoch kostengünstiger und auch mit geringerem Gewicht darstellbar, als dies in der Regel ein Linearmotor ist. Somit haben beide Ausgestaltungen bestimmte Vorteile und bestimmte Nachteile. Eine weitere ebenfalls hier nicht dargestellte Ausgestaltung zur Gewährleistung der translatorischen Bewegung 26 ist der Einsatz einer Pneumatikvorrichtung, die gegenüber den Elektromotor 28-Lösungen den Vorteil hat, dass lediglich Pneumatikschläuche zur Trägerplatte 30 gelegt werden müssen, was eine zusätzliche Gewichtseinsparung mit sich bringt.

Das bereits beschriebene magnetische Feld 48, das um die Greiffläche 8 herum wirkt, wird durch die Dauermagnetplatte 12 induziert. Die Stärke des Magnetfeldes 48 wiederum hängt von dem Abstand 36 der Dauermagnetplatte 12 von der Greifplatte 10 ab. Wird mittels der translatorischen Bewegung 26 die Dauermagnetplatte 12 nahe an die Greifplatte 10 herangeführt, so übersteigt die Stärke des Magnetfeldes 48 eine kritische Größe, sodass es die zu greifenden Gegenstände 6 an die Greiffläche 8 anhaftet. Durch den Abstand 36 kann somit die Magnetfeldstärke 48 genau eingestellt werden, sodass die Kraft nur so groß ist, wie dass die empfindlichen Gegenstände 6 bezüglich ihrer mechanischen Belastbarkeit vertragen können. Das heißt wiederum, dass die Stellung des Servomotors 29 oder die Position eines hier nicht dargestellten Linearmotors die Stärke des Magnetfeldes 48 beeinflussen. Durch empirische Magnetfeldmessungen bei unterschiedlichen Abständen 36 kann somit ein Steuersignal an den Elektromotor 30 ergehen, der für die zu transportierenden Gegenstände 6 das richtige Magnetfeld bzw. die richtige Magnetfeldstärke einstellt.

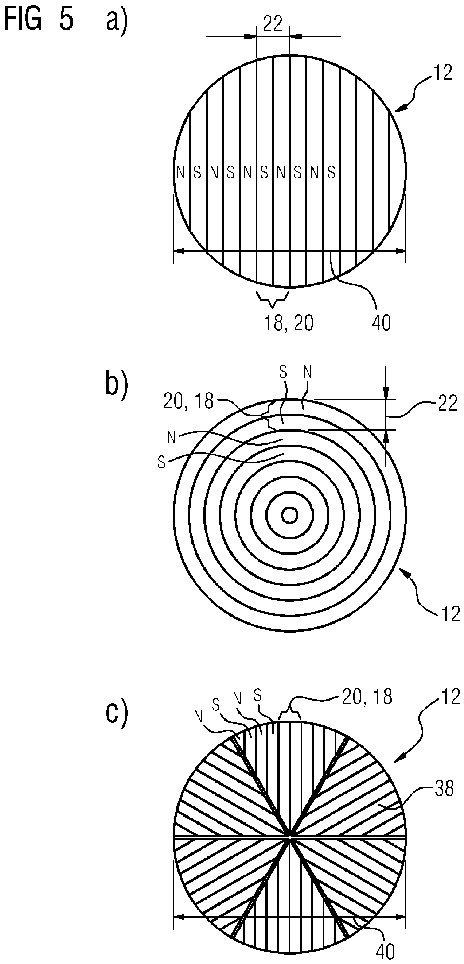

Neben der geeigneten Magnetfeldstärke für den jeweiligen Gegenstand 6 ist bei fragilen Gegenständen 6 die Homogenität des Magnetfeldes 48 bedeutend. Daher wird in der vorliegend beschriebenen Ausgestaltung auch kein herkömmlicher Elektromagnet verwendet, der ein vergleichsweise inhomogenes Magnetfeld herbeiführt, sondern es wird eine Dauermagnetplatte 12 zur Erzeugung des Magnetfeldes 48 bereitgestellt, die abwechselnd streifenförmige Nord-Süd-Polarisierungen 18 an ihrer Oberfläche aufweist. Dabei ist zur Erzeugung eines möglichst homogenen Magnetfeldes 48 die Bereitstellung von möglichst schmalen Streifen 20 der Nord-Süd-Polarisierung 18 zweckmäßig. Dies ist in verschiedenen Ausgestaltungsformen in der Figur 5a bis 5c gezeigt. In Figur 5a handelt es sich um eine kreisrunde Dauermagnetplatte 12, die parallele Streifen 20 mit Nord-Süd-Polarisierung 18 aufweist. Grundsätzlich kann die Dauermagnetplatte 12 auch andere Formen annehmen, für das Beispiel der zu greifenden Magnetbleche, die in diesem Fall die zu greifenden Gegenstände 6 bilden, ist eine kreisrunde Dauermagnetplatte zweckmäßig.

Dabei müssen die Streifen 20 auch nicht parallel verlaufen, wie dies in Figur 5a der Fall ist, sondern es kann auch gemäß Figur 5b ein konzentrischer kreisförmiger Verlauf der Streifen 20 eingestellt sein. Zudem ist es gemäß Figur 5c zweckmäßig, wenn die Dauermagnetplatte in einzelne Kreissegmente 38 segmentiert ist, und die Nord-Süd-Polarisierung der Streifen 20 entsprechend der Figur 5c in unterschiedliche Richtungen bezüglich des Mittelpunktes der kreisförmigen Ausgestaltung verlaufen.

Eine Breite 22 eines Paares von Nord-Süd-Polarisierungen 18, also von zwei Streifen 20 zusammengenommen, sollte dabei so schmal sein, dass weniger als 25 % eines Durchmessers 40 der Dauermagnetplatte 12 davon ausgefüllt ist. Je schmaler die Breite 22 der Streifen 20 ist, desto homogener wird das Magnetfeld 48, das entlang der Greiffläche 8 wirkt. Somit ist es zweckmäßig, dass die Breite 22 möglichst gering, bevorzugt geringer als 10 % des Durchmessers 40 ist.

Wie bereits dargelegt, können alle tragenden Bauteile der Greifvorrichtung 2, also insbesondere die Greifplatte 10, die Trägerplatte 33 für die Dauermagnetplatte 12 sowie die Motor-Montageplatte 31 aus einem Leichtmetall oder einem Kunststoff gefertigt sein. Dies wiederum führt dazu, dass die gesamte Greifvorrichtung 2 für sich genommen ein sehr geringes Gewicht aufweist, was wiederum die Möglichkeit mit sich bringt, dass sie an sogenannten kollaborativen Robotern montiert werden kann. Diese Roboter haben die Eigenschaft, dass sie in der Umgebung von menschlichem Bedienpersonal eingesetzt werden können, und nicht, wie dies in industriellen Anwendungen in der Regel der Fall ist, in gesicherten und abgesperrten Bereichen betrieben müssen. Das heißt, die beschriebene Greifvorrichtung 4 kann an einen Roboterarm 34 montiert sein, der in direkter Umgebung eines Bedieners eingesetzt wird. Insbesondere bei komplexen teilautomatisierten Prozessen ist dies ein technischer Vorteil gegenüber Greifvorrichtungen 2, die, wie im Stand der Technik üblich, mit schweren Elektromagneten oder Vakuumvorrichtungen ausgestattet sind.

### Bezugszeichenliste

- 2: Greifvorrichtung
- 4: Gehäuse
- 6: zu greifender Gegenstand
- 8: Greiffläche
- 10: Greifplatte
- 12: Dauermagnetplatte
- 14: Fläche (gegenüberliegend Greiffläche)
- 16: Lotgerade
- 18: Nord-Süd-Polarisierung
- 20: Streifen
- 22: Breite der Streifen
- 24: Greifflächendurchmesser
- 26: translatorische Bewegung
- 28: Elektromotor
- 29: Servomotor
- 30: Umlenkvorrichtung
- 31: Motor-Montageplatte
- 32: Aufnahmevorrichtung
- 33: Trägerplatte
- 34: Roboterarm
- 36: Abstand Dauermagnetplatte/Greifplatte
- 38: Dauermagnetsegmente
- 40: Magnetplattendurchmesser
- 42: Exzenterhebel
- 44: translatorische Führungsschiene
- 46: Transportzapfen
- 48: Magnetfeld

## Patentansprüche

1. Greifvorrichtung zum Aufnehmen von Gegenständen (6) in einem Produktionsprozess, umfassend
- ein Gehäuse (4), das an einer dem zu greifenden Gegenstand (6) zugewandten Seite eine Greiffläche (8) aufweist, die Teil einer Greifplatte (10) ist und
- eine Dauermagnetplatte (12), die einer der Greiffläche (8) gegenüberliegenden Fläche (14) der Greifplatte (10) zugewandt ist und die
- entlang einer Lotgerade (16) zur Greiffläche (8) innerhalb des Gehäuses (4) translatorisch (26) bewegbar gelagert ist, wobei
- die Dauermagnetplatte (12) kontinuierlich von streifenförmigen magnetischen Nord-Süd-Polarisierungen (18) durchzogen ist.

2. Greifvorrichtung nach Anspruch 1, **dadurch gekennzeichnet, dass** eine Breite (22) von jeweils zwei Streifen (20) einer Nord-Süd-Polarisierungen (18) weniger als 25 % eines Magnetplattendurchmessers (24) beträgt.

3. Greifvorrichtung nach Anspruch 2 **dadurch gekennzeichnet, dass** die Breite (22) weniger als 15 %, insbesondere weniger als 10 % beträgt.

4. Greifvorrichtung nach einem der vorhergehenden Ansprüche, **dadurch gekennzeichnet, dass** ein Gehäusematerial eine Dichte von weniger als 3 g/cm³ aufweist.

5. Greifvorrichtung nach Anspruch 4, **dadurch gekennzeichnet, dass** das Gehäusematerial einen Kunststoff umfasst.

6. Greifvorrichtung nach einem der vorhergehenden Ansprüche, **dadurch gekennzeichnet, dass** das Gehäuse (4) zumindest teilweise mittels eines Additiv-Manufacturing-Verfahrens hergestellt ist.

7. Greifvorrichtung nach einem der vorhergehenden Ansprüche, **dadurch gekennzeichnet, dass** die translatorische Bewegung (26) der Dauermagnetplatte (12) mittels einer PneumatikVorrichtung erfolgt.

8. Greifvorrichtung nach einem der Ansprüche 1 bis 6, **dadurch gekennzeichnet, dass** die translatorische Bewegung (26) der Dauermagnetplatte (12) mittels eines Elektromotors (28) erfolgt.

9. Greifvorrichtung nach Anspruch 8, **dadurch gekennzeichnet, dass** der Elektromotor (28) ein Servomotor (29) oder ein Linearmotor ist.

10. Greifvorrichtung nach Anspruch 9, **dadurch gekennzeichnet, dass** der Elektromotor (28) ein Servomotor ist und eine Umlenkvorrichtung (30) vorgesehen ist, die die rotatorische Bewegung des Servomotors (29) in die translatorischen Bewegung (26) umwandelt.

11. Greifvorrichtung nach einem der vorhergehenden Ansprüche, **dadurch gekennzeichnet, dass** die Dauermagnetplatte (12) an einer Trägerplatte (33) angebracht ist.

12. Greifvorrichtung nach einem der vorhergehenden Ansprüche, **dadurch gekennzeichnet, dass** mittels eines Abstandes (36) der Dauermagnetplatte (12) von der Greifplatte (10) entlang der Lotgerade (16) die Stärke eines Magnetfeldes, das auf den zu greifenden Gegenstand (6) wirkt, einstellbar ist.

13. Greifvorrichtung nach einem der vorhergehenden Ansprüche **dadurch gekennzeichnet, dass** die Greifvorrichtung (2) eine Aufnahmevorrichtung (32) für einen Roboterarm (34) umfasst.

14. Roboterarm mit einer Greifvorrichtung (2) nach einem der Ansprüche 1 bis 13.
